# EUROPÄISCHE PATENTSCHRIFT

(11) **EP 1 409 106 B1**
(45) Veröffentlichungstag und Bekanntmachung des Hinweises auf die Patenterteilung: **22.12.2004**
(21) Anmeldenummer: 02748819.6
(22) Anmeldetag: 26.06.2002
(51) Int. Cl.: B01D 29/11, B29C 65/08

(54) **VERFAHREN ZUM HERSTELLEN EINER VERBINDUNGSSTELLE BEI EINEM FILTERELEMENT**
METHOD FOR PRODUCING A CONNECTION INTERFACE IN A FILTER ELEMENT
PROCEDE DE REALISATION D'UNE INTERFACE DE CONNEXION D'UN ELEMENT FILTRANT

(30) Priorität: 20.07.2001 DE 10135421
(43) Veröffentlichungstag der Anmeldung: 21.04.2004
(73) Patentinhaber: Hydac Filtertechnik GmbH, 66280 Sulzbach/Saar (DE)
(72) Erfinder: ALTMEYER, Gerd, 66386 St. Ingbert (DE); LANG, Jürgen, 66280 Sulzbach (DE); MEES, Harald, 66822 Lebach (DE)
(74) Vertreter: Patentanwälte Bartels und Partner
(86) Internationale Anmeldenummer: PCT/EP2002/007037
(87) Internationale Veröffentlichungsnummer: WO 2003/009922

(56) Entgegenhaltungen:
- EP-A- 0 386 701
- WO-A-01/05483
- WO-A-99/10080
- DE-A- 19 651 242
- US-A- 4 079 570
- PATENT ABSTRACTS OF JAPAN vol. 1997, no. 10, 31. Oktober 1997 (1997-10-31) -& JP 09 142416 A (FUJIMORI KOGYO KK), 3. Juni 1997 (1997-06-03)
- PATENT ABSTRACTS OF JAPAN vol. 1995, no. 04, 31. Mai 1995 (1995-05-31) -& JP 07 017568 A (MITSUBISHI PLASTICS IND LTD;OTHERS: 01), 20. Januar 1995 (1995-01-20)

## Beschreibung

Die Erfindung betrifft ein Verfahren zum Herstellen einer Verbindungsstelle bei einem rohrförmigen Filterelement zur Filtration von Fluiden mit einer Filtermatte, deren einander zugewandten Enden in einer Verbindungslage über eine flächig aufgebrachte Schweißnaht miteinander verbunden werden, die im Bereich der freien Filtermattenenden mit einer eingeprägten Bahn versehen wird. Ferner betrifft die Erfindung eine dahingehende Herstellvorrichtung.

Derart hergestellte Filterelemente dienen zur Filtration von Flüssigkeiten, beispielsweise in Form von Hydrauliköl oder von Lösungen jedweder Art, beispielsweise in Form von echten Suspensionen, Dispersionen, Emulsionen oder kolloiden Lösungen, und haben sich wegen ihrer kompakten Bauweise und ihrer großen Filterfläche allgemein bewährt. Um sicherzustellen, daß der Fluidstrom nur durch das eigentliche Filtermedium hindurchgeführt wird, bildet neben der Abdichtung an den beiden Endkappen die Verbindungsstelle der beiden einander zugewandten Enden der Filtermatte in Form von Endstegen eine der kritischen Stellen, die leckdicht zu schließen sind.

Die bekannten Filterelemente, wie sie auf dem Markt frei erhältlich sind, weisen eine unter Umständen aus verschiedenen Filtermaterialien zusammengesetzte zick-zack-förmig gefaltete oder plissierte Filtermatte auf, die um ein massives, im Inneren des Filterelementes angeordnetes, mit Durchlässen versehenes Stützrohr herumgelegt ist und die als Schutz vor Beschädigungen von außen in ein feinmaschiges Drahtgewebe eingefaßt ist, das dem Faltenverlauf der Filtermatte nachfolgt. Bei einem Teil der bekannten Verfahren zum Herstellen der bekannten Filterelemente wird die angesprochene Verbindungsstelle der beiden Filtermattenenden ebenso wie die Verbindung der Filtermatte mit den Endkappen über ein Klebstoffbett erhalten, beispielsweise in Form eines Epoxidharzklebstoffes, wobei jedoch in Abhängigkeit des eingesetzten Klebstoffes bei der Weiterverarbeitung oder Weiterverwendung des Filterelementes Wartezeiten entstehen, bis der Klebstoff aufgrund seiner Gelierzeiten belastungsfähig und nach seiner Härtezeit weiterverwendet werden kann.

Durch die EP-B-0 001 407 ist ein Verfahren zum Herstellen eines rohrförmigen gewellten Filterelementes bekannt, das mit mindestens einem Filtergewebeblatt versehen wird, dessen eine Seitenverbindung bildenden Kanten aneinandergelegt werden und in einer Seitenkantendichtung mittels eines selbsttragenden, kanalförmigen Streifens miteinander verbunden werden. Der Streifen wird als klebend verbindender Streifen aus einem thermoplastischen Kunstharz gebildet, der die Kanten des Filterblatts umfaßt, wobei der Streifen mit dem Filterblatt klebend verbunden wird und dabei werden die Kanten des Filterblattes in einer Verbundstoffdichtung leckdicht miteinander abgedichtet, wodurch ein Austreten einer unfiltrierten Flüssigkeit zwischen den Kanten des Filterblattes des rohrförmigen Filterelementes vermieden wird. Der dahingehende Verbindungsstreifen bildet eine Art U-förmigen Längsclip aus, der mit den Filtermattenenden über Heizplatten und mithin unter Wärme und Druck verschweißt wird.

Bei dem bekannten Verfahren lassen sich also die vorstehend beschriebenen Klebstoffverbindungen vermeiden sowie den damit einhergehenden höheren Fertigungsaufwand. Die freien Schenkel des bekannten leistenförmigen Verbindungsclips sind elastisch nachgiebig ausgebildet, so daß diese sich beim Einschieben der Filtermattenenden aufweiten können und auf diese dann einen für die Festlegung notwendigen Anpreßdruck ausüben. An der Stelle des Überganges der beiden freien Schenkel des Längsnahtclips bildet dieser eine Art Anschlag aus, gegen den die freien Enden der Filtermattenenden anstoßen und/oder in Einschubrichtung in den Clip begrenzt sind, so daß die Filtermattenenden bündig miteinander abschließen und die für das Herstellen der Schweißverbindung in Form einer Glattnaht benötigte definierte Position einnehmen. Es hat sich jedoch gezeigt, daß trotz der dahingehend vorbereiteten Schritte beim Einbringen der beschriebenen Anordnung in eine Schweißvorrichtung die Filtermattenenden sich zueinander verschieben können, was die Qualität der aufzubringenden Schweißnaht deutlich vermindern kann. Somit ist nicht ausgeschlossen, daß es zu einem späteren Versagen des Filterelementes im Einsatz im Bereich der Schweißnahtstellen kommt. Letzteres gilt insbesondere bei hoch beanspruchten Filterelementen, wo dann die dahingehende Schweißnahtverbindung aufreißen und somit nicht nur zu einem Versagen des Filterelementes, sondern auch zum Ausfall einer gesamt hydraulischen Anlage führen kann, in die das dahingehende Filterelement eingesetzt ist.

Durch die DE-A-196 51 242 ist der Amboß einer Ultraschall-Siegeleinheit bekannt zum Versiegeln mindestens zweier Materialfelder, die aus mit Kunststoff beschichtetem Trägermaterial bestehen, mit einer relativ zum Amboß bewegbaren Sonotrode, wobei die vorn am Amboßkörper befindliche Siegelfläche mittels erhabener und vertiefter Bereiche profiliert ist. Mit der bekannten Lösung ist es nicht möglich, rohrförmige Filterkörper und deren.Filtermaterialien mittels Ultraschall zu siegeln oder zu verschweißen und bei der bekannten Lösung wird eine Glattschweißnaht am freien Ende der zur Verbindung anstehenden Flächenmaterialien angebracht, was für den Anwendungsfall bei Milchtüten günstig ist, da diese in dem Bereich der Glattschweißnaht von Hand leicht öffenbar sein sollen. Eine funktionssichere Verbindungsstelle auch bei höchster Belastung ist dergestalt mit der bekannten Lösung nicht erreichbar.

Durch die WO 01/05483 A1 ist ein gattungsgemäßes Verfahren zum Herstellen einer Verbindungsstelle bei einem rohrförmigen. Filterelement bekannt mit einer plissierten Filtermatte, deren einander zugewandten Enden in ihrer Lage über eine Verbindungsleiste fixiert sind, die die Enden zumindest teilweise übergreift, wobei die Verbindungseinrichtung.aus einem thermisch verformbaren Kunststoff bestehend mit den Enden der Filtermatte verschweißt wird. Der Schweißvorgang wird ohne Schweißzusatz ausgeführt und der Clip verbindet im eingeschmolzenen Zustand sich mit den Filtermattenenden. Bei dem dahingehenden Schweißvorgang erhält die Verbindungsleiste in Form des Kunststoffclips zumindest entlang einer ihrer beiden Schenkel derart eine Einprägung, daß die Filtermattenenden in verdichteter Form miteinander verschweißt sind. Da sich der Schweißvorgang in äußerst kurzer Zeit bei gleichzeitigem Einbringen der Prägung bis zum tatsächlichen Herstellende durchführen läßt, ist eine rationelle Fertigung ohne Verwendung zusätzlicher Epoxidharzklebstoffe od. dgl. möglich, so daß auch keine Stand- oder Gelierzeiten entstehen und das Element sofort einsetzbar ist oder. direkt weiterverarbeitet werden kann.

Ferner ist durch die Einprägung erreicht, daß die Filtermattenenden in verdichteter Form miteinander verschweißt sind, so daß sich auf diese Art und Weise eine besonders feste und dauerhafte Verbindung für die Filtermattenenden ergibt, selbst wenn diese sehr hohen Fluiddrücken bei der Filtration ausgesetzt sein sollten. Da die Filtermattenenden hinter der Einprägeschweißnaht in Richtung der plissierten Teile der Filtermatte aufgrund der Eigenspannung des Materials auseinandergezogen werden, kommt es derart in diesem Bereich zu einem klaffenden Spalt, was die Dichtleistung beeinträchtigt und insbesondere dann eine Rolle spielen kann, wenn bei nicht ganz sauber hergestellter Einprägeschweißnaht diese durchgeprägt ist und sich derart mögliche Durchlaßstellen für einen ungewollten Fluiddurchtritt ergeben. Durch den darüber hinaus aufklaffenden Spalt im Bereich des Überganges zwischen Plissierung und eingeprägter Schweißnaht kommt es zur Einleitung von Materialspannungen in den Einprägeschweißnahtbereich, so daß die dahingehende Schweißnaht, insbesondere wenn das Filterelement im Betrieb Druckwechselbeanspruchungen ausgesetzt ist, derart eine hohe punktuelle oder linienförmige Krafteinleitung erfährt, daß es gleichfalls zu einem Versagen kommen kann.

Ausgehend von diesem. Stand der Technik liegt der Erfindung die Aufgabe zugrunde, ein Verfahren zum Herstellen eines rohrförmigen Filterelementes zu schaffen sowie eine Vorrichtung zum Herstellen desselben zur Verfügung zu stellen, die wie bei den bekannten Lösungen eine Verbindung der Filtermattenenden sicherstellt, die gleichzeitig aber auch zur Vermeidung von Klebstoffen den Fertigungsaufwand und mithin die Herstellkosten reduzieren sowie zu funktionssicheren Verbindungsstellen, auch bei höchster Belastung, führen. Eine dahingehende Aufgabe löst ein Verfahren mit den Merkmalen des Patentanspruches 1 sowie eine Vorrichtung zum Durchführen des Verfahrens mit den Merkmalen des Patentanspruches 10.

Dadurch, daß gemäß dem kennzeichnenden Teil des Patentanspruches 1 zwischen der Einprägeschweißnaht und dem Beginn des Überganges zur rohrförmigen Filtermatte ein Bereich vorgesehen ist, in dem eine Glattschweißnaht einprägungsfrei in einer flachen Bahn entlang den Filtermattenenden aufgebracht wird, ist nach wie vor erreicht, daß die Filtermattenenden in verdichteter Form über die Einprägung miteinander verschweißt werden, so daß sich auf diese Art und Weise eine besonders feste und dauerhafte Verbindung der Filtermattenenden ergibt, selbst wenn diese sehr hohen Fluiddrücken bei der Filtration ausgesetzt sein sollten. Gleichzeitig ist aber auch die Einprägeschweißnaht über die Glattschweißnaht entlastet und bei einem gegebenenfalls ungewollten Durchprägen im Bereich der Einprägeschweißnaht ist die Glattschweißnaht ohne weiteres in der Lage, die anstehenden Kräfte im Betrieb des Filterelementes ausschließlich aufzunehmen und eine fluiddichte Verbindung des Filterelementes nach außen hin sicherzustellen. Es ist für einen Durchschnittsfachmann auf diesem Gebiet überraschend, daß sogar über die einprägungsfreie Glattschweißnaht sich ein besseres Abdichtergebnis erreichen läßt als mit der bisher eingesetzten Einprägeschweißnaht.

Neben der Entlastung der Einprägeschweißnaht durch die Glattschweißnaht ist aber auch die Einprägeschweißnaht für das Erstellen der Glattschweißnaht vorteilhaft, da während des Einprägevorgangs die freien Filtermattenenden genau zueinander justiert sind und dergestalt verschiebungsfrei miteinander verbunden werden. Letzteres kommt dann aber auch der Qualität der Glattschweißnaht zugute, die zeitgleich mit der Einprägeschweißnaht hergestellt wird und somit eine sehr hohe Herstellgüte erfährt. Das gleichzeitige Anbringen von Glattschweißnaht und Einprägeschweißnaht hat also dergestalt einen synergistischen Effekt, daß beide an sich unterschiedliche Schweißnahtbereiche immer jeweils günstig auf den anderen Schweißnahtbereich einwirken.

Dadurch, daß gemäß der Merkmalsausgestaltung des Patentanspruches 10 die erfindungsgemäße Vorrichtung zum Herstellen des dahingehenden Filterelementes eine Ultraschall - Schweißeinrichtung einsetzt, ist ein energetisch besonders günstiger Verbindungsvorgang für die Filtermattenenden gewährleistet.

Bei einer bevorzugten Ausführungsform des erfindungsgemäßen Verfahrens wird zum Verbinden der Filtermattenenden eine Verbindungsleiste in der Art eines Clips eingesetzt, der aus einem thermisch verformbaren Kunststoff besteht und auf die Filtermattenenden aufgeschoben diese während des Schweißvorganges aneinanderhält. Ein dahingehender Verbindungsclip ist insbesondere dann vorteilhaft, wenn die Filtermatte selbst wenig Kunststoffmaterialien aufweist, die thermisch miteinander verbindbar sind. Des weiteren kann das Aufbringen eines anschließend verschweißbaren leistenförmigen Verbindungsclips vorteilhaft sein, wenn die äußerste Filtermatterischicht aus einem Metall - Stützdrahtgewebe besteht.

Bei einer weiteren bevorzugten Ausführungsform des erfindungsgemäßen Verfahrens wird die Einprägung aus rechteckförmigen, insbesondere quadratischen Prägeelementen gebildet, die vorzugsweise an die Gitterstruktur des jeweiligen Filtermattengewebes angepaßt werden. Damit kann die jeweilige, aus verschweißtem Kunststoffmaterial bestehende Einprägung in die freien Zwischenabstände in der Gewebestruktur eingreifen, um derart eine besonders hochfeste Verbindung zu gewährleisten. Sofern das Gewebe aus Kunststoffmaterial besteht, wird das dahingehende Gewebematerial unmittelbar mit dem Prägematerial der jeweiligen Einprägung schweißend verbunden.

Bei einer bevorzugten Ausführungsform einer Vorrichtung zum Durchführen des vorstehend beschriebenen Verfahrens ist für den thermischen Schweißvorgang eine Ultraschall - Schweißeinrichtung eingesetzt mit einer leistenförmigen Sonotrode und einem gegenüberliegenden Amboß, wobei zumindest der Amboß mit einer Einprägeeinrichtung für das Aufbringen der Einprägeschweißnaht und einem einprägefreien Bereich versehen ist für das Aufbringen der Glattschweißnaht. Mit der dahingehenden Vorrichtung lassen sich somit in einem Arbeitsgang zeitgleich Einprägeschweißnaht und Glattschweißnaht im Bereich der Filtermattenenden aufbringen.

Im folgenden wird das erfindungsgemäße Verfahren sowie die Vorrichtung zur Anwendung des Verfahrens anhand einer Ausführungsform nach der Zeichnung näher erläutert. Es zeigen dabei in prinzipieller und nicht maßstäblicher Darstellung die
- Fig.1: in perspektivischer Ansicht die Filtermatte mit dem Verbindungsclip, ungeschweißt;
- Fig.2: einen Bildausschnitt der Filtermatte mit Verbindungsclip nach der Fig.1, ungeschweißt;
- Fig.3: teilweise in Ansicht, teilweise im Schnitt dargestellt die stirnseitige Ansicht auf das Filterelement;
- Fig.4: in perspektivischer Darstellung die wesentlichen Bestandteile der Vorrichtung zum Herstellen der Schweißverbindung;
- Fig.5a, b: in Draufsicht sowie in Seitenansicht einen Ausschnitt eines Teils des Ambosses nach der Fig.4;
- Fig.6: die mit der Vorrichtung nach der Fig.4 speziell-herstellbare Schweißnahtausbildung über eine Glatt- und eine Einprägeschweißnaht mittels des Verbindungsclips.

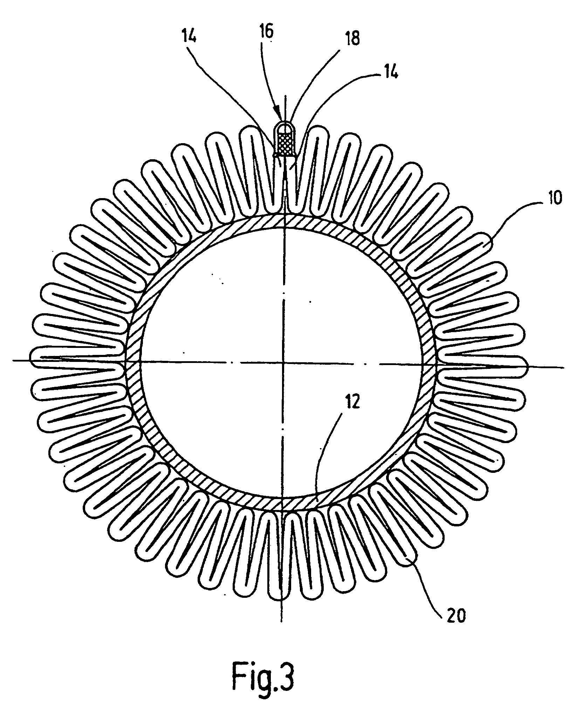

Das herzustellende rohrförmige Filterelement ist in stimseitiger Ansicht in der Fig.3 dargestellt. Es dient zur Filtration von Fluiden und weist eine zick-zack-förmig oder plissiert gefaltete Filtermatte 10 auf. Die Filtermatte 10 ist, was nicht näher dargestellt ist, mehrschichtig aufgebaut und kann beispielsweise von außen nach innen folgenden Schichtaufbau aufweisen:
1. Metalldrahtgewebe oder Kunststoffgewebe oder Kunststoffgitter mit Netzstruktur,
2. Polyestervlies,
3. Glasfasermatte oder Meltblownvlies,
4. Glasfasermatte oder Meltblownvlies,
5. Papiervlies oder Polyestervlies,
6. Edelstahl-Polyester-Mischgewebe,
7. Metalldrahtgewebe oder Kunststoffgewebe oder Kunststoffgitter mit Netzstruktur.

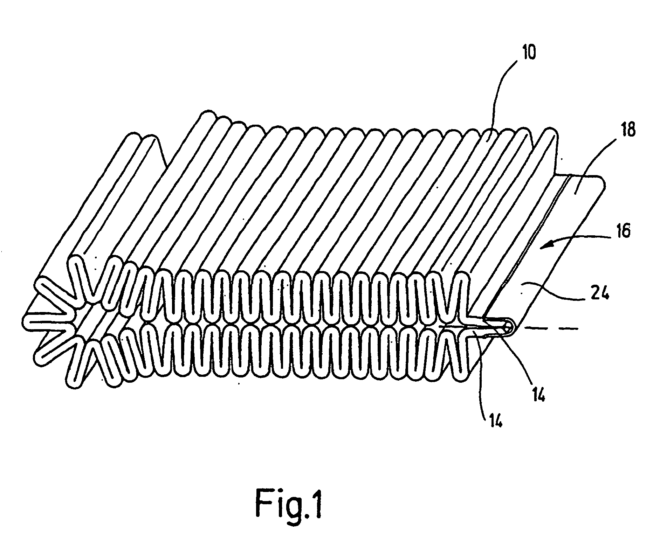

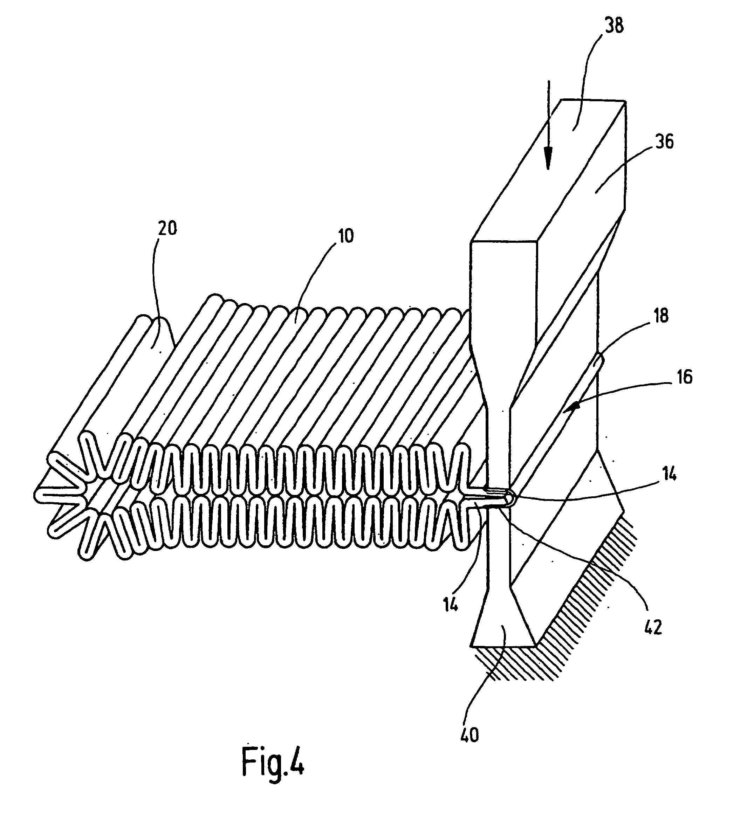

Zur Abstützung der Filtermatte 10 ist im Inneren des Filterelementes ein metallisches Stützrohr 12 vorgesehen, das mit Fluiddurchlässen (nicht dargestellt) versehen ist. Die beiden einander zugewandten Enden 14 der Filtermatte 10 laufen in einem spitzen Winkel aufeinander zu und ihre Länge ist etwas kürzer gehalten als die Länge der benachbart angeordneten Falten der Filtermatte 10. Aufgrund der eingesetzten Schichtmaterialien ist die rohrförmige Filtermatte 10 nachgiebig und die plissierten Filterbahnen können beispielsweise aufeinandergelegt werden, wie dies in den Fig.1 und 4 beispielhaft dargestellt ist. Das Stützrohr 12 gibt mithin der Filtermatte 10 einen gewissen Halt und definiert deren Position im späteren Filterelement. Eine Verbindungseinrichtung fixiert die einander zugewandten Enden 14 der Filtermatte 10, wobei die Verbindungseinrichtung, wie die Figuren zeigen, die Enden 14 zumindest teilweise von ihrem freien Ende her übergreift. Die Verbindungseinrichtung ist als Verbindungsleiste 16 in der Art eines Clips 18 ausgebildet, der auf die Filtermattenenden 14 aufgeschoben diese für einen thermischen Schweißvorgang aneinanderhält, wobei ohne Schweißzusatz der Clip 18 im angeschmolzenen Zustand sich mit den Filtermattenenden 14 unlösbar verbindet. Die Verbindungseinrichtung in Form des Verbindungsclips 18 besteht vorzugsweise aus einem Polyamidoder Polyesterwerkstoff, die gute thermische Schweißeigenschaften aufweisen.

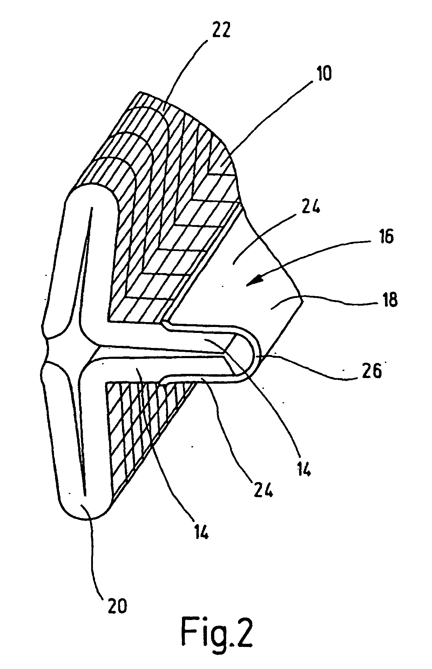

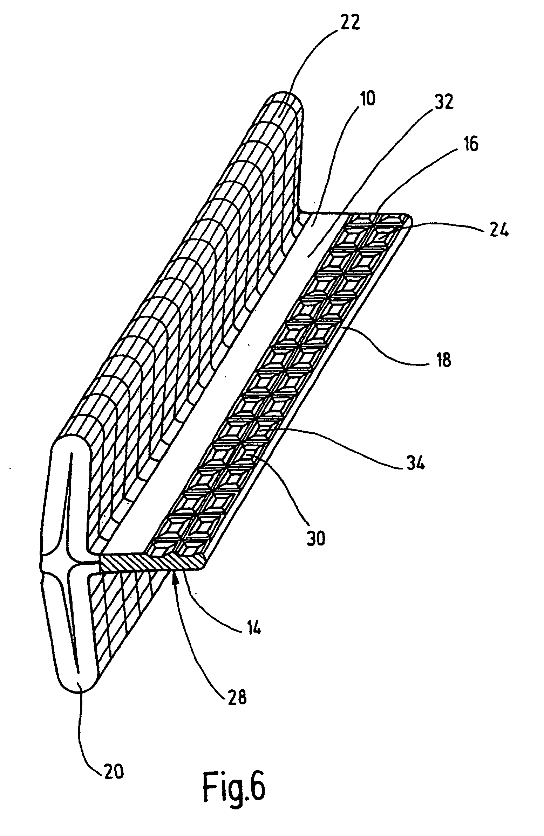

In den Figuren sind die einzelnen Schichten der Filtermatte 10 der einfacheren Darstellung wegen als Schichteneinheit 20 dargestellt, wobei in den Fig. 2 und 6 das zu äußerst liegende gitterartige Kunststoff- oder Metalldrahtgewebe mit 22 bezeichnet ist.

Wie insbesondere die Fig.1 und 2 zeigen, wird der Kunststoff- oder Verbindungsclip 18 mit seinen beiden freien Umfassungsschenkeln 24 auf die freien Schenkel bzw. freien Enden 14 der Filtermatte 10 aufgeschoben und hält diese aufgrund seiner Eigenelastizität zusammen. Die beiden Umfassungsschenkel 24 des Clips 18 sind über ein bogenartiges Verbindungsstück 26 miteinander verbunden, wobei das Verbindungsstück 26 aufgrund der in diesem Bereich aufeinander zulaufenden Umfassungsschenkel 24 eine definierte Anlage bildet für die freien Enden 14 der Filtermatte 10. Auf diese Art und Weise ist gewährleistet, daß die beiden Enden 14 in etwa gleicher Höhe enden und in definierter Anlage zueinander gelangen für den später vorgesehenen, noch zu beschreibenden Schweißvorgang. Aufgrund der Eigenelastizität des Clips 18 kann diese definierte Anlagemöglichkeit bereits im Bereich der Umfassungsschenkel 24 gegeben sein und nicht erst im bogenförmigen Anlagegrund des Verbindungsstückes 26. Der Kunststoffclip 18 ist dahingehend optimiert, daß die freie Einschuböffnung für die Filtermattenenden 14 etwas kleiner gehalten ist als die Breite der beiden übereinanderliegenden Filtermatten 14, so daß aufgrund des Kunststoffelastizitätsverhaltens des Clips 18 eine anpressende Anlage der freien Filtermattenenden 14 aneinander erfolgt. Besonders kostengünstig lößt sich der Clip 18 dadurch herstellen, daß er vergleichbar der Filtermatte 10 aus aufgefalteten oder plissierten Bögen besteht, die voneinander getrennt dann jeweils einen Längsclip 18 ergeben. Um die Einschubmöglichkeit der Filtermattenenden 14 nicht zu beeinträchtigen, ist darüber hinaus vorgesehen, daß der Clip 18 im Bereich der freien Enden der beiden Umfassungsschenkel 24 mit einer nach außen weisenden bogenförmigen Einführhilfe versehen ist.

Mit dem Schweißverfahren zum Herstellen der Verbindungsstelle wird in der aufgezeigten Verbindungslage der Filtermattenenden 14 diese über eine flächig aufgebrachte Schweißnaht miteinander verbunden, wobei die als Ganzes mit 28 bezeichnete Schweißnaht im Bereich der freien Filtermattenenden 14 mit einer eingeprägten Bahn und mithin mit einer Einprägeschweißnaht 30 versehen wird, wohingegen zwischen dieser Einprägeschweißnaht 30 und dem Beginn des Übergangs zur rohrförmigen Filtermatte 10 ein Bereich vorgesehen ist, in dem eine Glattschweißnaht 32 einprägungsfrei in einer flachen Bahn entlang den Filtermattenenden 14 aufgebracht wird. Mit dem Schweißvorgang wird also der Kunststoffclip 18 thermisch verformt und ist dann mit einer Prägung 34 (vgl. Fig.6) versehen, die der gitterartigen Grundstruktur des Metalldrahtgewebes 22 im wesentlichen entspricht, d.h. das thermisch verformte Kunststoffmaterial des Clips 18 dringt in die freien Abstände innerhalb der Gitterstruktur des Kunststoffoder Metalldrahtgewebes 22 ein, so daß ein besonders fester Verbund erreicht ist, was noch weiter dadurch unterstützt wird, daß die Schichteneinheit 20, die zumindest teilweise gleichfalls Kunststoffmaterialien aufweist, mit verschweißt ist. Gleichzeitig mit dem Einbringen der Prägung 34 entsteht jedoch auch die Glattschweißnaht 32, die dann unter anderem dafür Sorge trägt, daß die im Querschnitt zumindest teilweise durch die Prägung 34 geschwächte Einprägeschweißnaht 30 von schädigenden Druckwechselbeanspruchungen und Kraftspitzen freigehalten ist. Im Gegenzug erlaubt die Prägung 34 eine genaue Justierung der Filtermattenenden 14 während des Schweißvorganges, so daß die glatten Bahnen im Bereich der Glattschweißnaht 32 sauber aufeinander zu liegen kommen und dergestalt eine hochfeste Schweißverbindung erreicht ist, ohne daß gegebenenfalls etwaige Aufwerfungen im Bahnenmaterial eine mögliche Leckagestelle ausbilden könnten.

Für das dahingehende Verschweißen der Filtermattenenden 14 mit der Verbindungseinrichtung wird ein Ultraschall - Schweißverfahren eingesetzt, wobei jedoch auch andere thermische Schweißverfahren einsetzbar wären.

Wie insbesondere die Fig.3 zeigt, sind die längenverhältnisse jedenfalls im Bereich der Verbindungsnaht derart gewählt, daß die Verbindungseinrichtung in radialer Richtung gesehen entlang des radialen Außenumfanges der Filtermatte 10 endet. Die Filtermattenenden 14 sind also im angeschmolzenen Zustand des Clips 18 derart in diesen eingebettet, daß eine unlösbare, permanente Verbindung für die spätere Filtration mit der Filtermatte 10 bzw. mit dem Filterelement entsteht. Die angesprochene Prägung 34 kann entlang eines Umfassungsschenkels 24 oder entlang von beiden Umfassungsschenkeln 24 erfolgen. Des weiteren kann die dahingehende Verbindungsstelle über eine Einprägeschweißnaht 30 und eine Glattschweißnaht 32 auch unter Weglassen der Verbindungseinrichtung mit Verbindungsleiste 16 erfolgt. Die dahingehende Verbindung bietet sich insbesondere an, wenn die Filtermatten 10 und mithin auch die Enden 14 einen hohen schweißbaren Kunststoffteil aufweisen, so daß der Schweißvorgang problemlos vonstatten gehen kann. In einem dahingehenden Fall ist von der Vorrichtungsseite her sicherzustellen, daß sich während des Schweißvorganges die Filtermattenenden 14 nicht ungewollt gegeneinander verschieben können.

In der Fig.4 ist nunmehr die Ultraschall - Schweißeinrichtung 36 dargestellt, mit der sich der thermische Schweißvorgang durchführen läßt. Die Ultraschall - Schweißeinrichtung weist dabei eine leistenförmige Sonotrode 38 auf und einen leistenförmigen Amboß 40. Der Amboß 40 der Ultraschall - Schweißeinrichtung 36 ist dabei im wesentlichen feststehend angeordnet, wobei die Sonotrode 38 für einen Schweißvorgang in Richtung des Pfeiles innerhalb der Fig.4 von einer Ausgangsstellung in Richtung auf das Schweißgut in Form des Längsnahtclips 18 für einen Schweißvorgang bewegbar ist. Für den Schweißvorgang wird die Filtermatte 10 mit ihren Filterfalten, wie in der Fig. 4 angegeben, aneinandergelegt und nach Aufschieben des Clips 18 dann das Verschweißen der Filtermattenenden 14 mit diesem Clip vorgenommen. Der dahingehende Schweißvorgang läßt sich durch Handhabungshitfen noch weiter erleichtern. Es ist aber auch möglich, von Hand die Filtermatte 10 der Schweißeinrichtung 36 zuzuführen.

Nach Beendigung des Schweißvorganges wird die Sonotrode 34 wieder abgehoben und es ergibt sich dann eine Schweißnahtausbildung nach der Fig.6. Die Filtermatte 10 kann in eine rohrförmige Ausbildung gebracht und auf das Stützrohr 12 für die weitere Komplementierung zum Komplett-Filterelement zusammengesetzt werden.

Durch das Schweißverfahren wird eine Schweißkantenversiegelung zum Verhindern von Fasermigration erreicht, so daß beispielsweise Glasfasern des Filtermediums in der Filtermatte 10 sicher zurückgehalten sind. Der Clip 18 ist im Hinblick auf die benötigte Kunststoffmenge derart dimensioniert, daß sich jedenfalls ohne Schweißzusatz die Verbindungsnaht herstellen läßt. Mit der erfindungsgemäßen Filtermatte 10 sowie mit der Vorrichtung 36 zum Herstellen derselben ist ein rationelles Fertigungsverfahren ohne Verwendung von Verbindungsklebstoff, wie Epoxidharzklebstoff, möglich, so daß für das Aushärten des Klebstoffes keine Wartezeiten entstehen und die Filtermatte 10 bzw. das Filterelement direkt weiterverarbeitbar ist. Auch kommt ein Verzicht auf die regelmäßig Löseungsmittel enthaltenden Klebstoffe der Umwelt zugute.

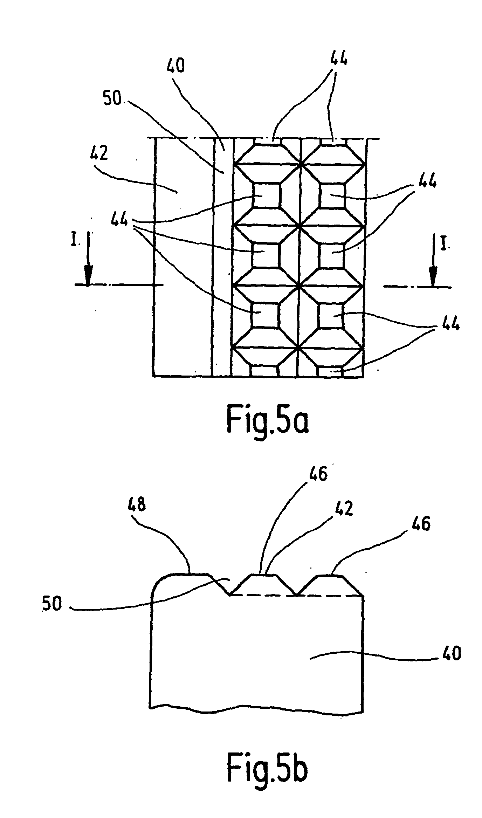

In den Fig. 5a und 5b ist in Draufsicht und in einer Seitenansicht ein Ausschnitt längs der Oberseite des Ambosses 40 wiedergegeben. Wie sich mithin aus den Fig.5a und 5b ersehen läßt, ergibt sich die Prägung 34 durch Einzelelemente 44 mit quadratischer Querschnittsform. Die Fig.5b, die einen Querschnitt längs der Linie 1- I in Fig.5a darstellt, macht deutlich, daß die jeweiligen Einzelelemente 44 an ihren Übergangsstellen eine dachförmige Querschnittskonstruktion aufweisen, wobei die eben verlaufenden Firstteile 46 in einer Ebene liegen mit der Oberseite der die Glattschweißnaht 32 herstellenden Schweißbahn 48. Die dahingehende Schweißbahn 48 ist von ihrer Breite her in etwa gleich groß bemessen wie die Gesamtbreite aus den Einzelfirstteilen 46 der Einzelelemente 44, die in zwei parallel nebeneinanderliegende Reihen in der Oberseite 42 des Ambosses 40 integriert sind. Um einen guten Entformungsvorgang sicherstellen zu ,können, sind die Einzelelemente 44 gegenüber ihren Firstteilen 46 mit entsprechenden Formschrägen versehen. Eine dahingehende Entformungsschräge 50 ist auch im Bereich des Überganges zwischen den Einzelelementen 44 zu der Schweißbahn 48 vorgesehen.

Die derart mittels des Ambosses 40 herstellbare Einprägeschweißnaht 30 sowie Glattschweißnaht 32 ergänzen sich in besonders sinnfälliger Weise und erlauben hochfeste sichere Verbindungen im Bereich der Filtermattenenden von Filterelementen.

## Patentansprüche

1. Verfahren zum Herstellen einer Verbindungsstelle bei einem rohrförmigen Filterelement zur Filtration von Fluiden mit einer Filtermatte (10), deren einander zugewandten Enden (14) in einer Verbindungslage über eine flächig aufgebrachte Schweißnaht (28) miteinander verbunden werden, die im Bereich der freien Filtermattenenden (14) mit einer eingeprägten Bahn versehen wird, **dadurch gekennzeichnet, daß** zwischen der derart gebildeten Einprägeschweißnaht (30) und dem Beginn des Überganges zur rohrförmigen Filtermatte ein Bereich vorgesehen ist, in dem eine Glattschweißnaht (32) einprägungsfrei in einer flachen Bahn entlang den Filtermattenenden (14) aufgebracht wird.

2. Verfahren nach Anspruch 1, **dadurch gekennzeichnet, daß** die Schweißnaht (28) in Form der eingeprägten Bahn (30) und der einprägungsfreien Bahn (32) zeitgleich aufgebracht wird.

3. Verfahren nach Anspruch 1 oder 2, **dadurch gekennzeichnet, daß** zum Verbinden der Filtermattenenden (14) eine Verbindungsleiste (16) in der Art eines Clips (18) eingesetzt wird, die aus einem thermisch verformbaren Kunststoff besteht und auf die Filtermattenenden (14) aufgeschoben diese während des Schweißvorganges aneinanderhält.

4. Verfahren nach einem der Ansprüche 1 bis 3, **dadurch gekennzeichnet, daß** für die Filtermatte (10) zumindest außenumfangsseitig ein Kunststoffgewebe (22) eingesetzt wird oder daß die Filtermatte (10) selbst zumindest teilweise aus thermisch verformbaren Kunststoffen aufgebaut wird.

5. Verfahren nach einem der Ansprüche 1 bis 4, **dadurch gekennzeichnet, daß** die Einprägung (34) aus rechteckförmigen, insbesondere quadratischen Prägeelementen (44) gebildet wird, die vorzugsweise an die Gitterstruktur des jeweiligen Filtermattengewebes angepaßt werden.

6. Verfahren nach einem der Ansprüche 1 bis 5, **dadurch gekennzeichnet, daß** die rohrförmige Filtermatte (10) sowohl mit einer Plissierung als auch mit einem Mehrschichtenaufbau versehen wird und daß als Schichten mindestens ein Polyestervlies und/oder eine Glasfaserschicht und/oder ein Papiervlies und/oder ein Meltblownvlies und/oder ein Edelstahl - Polyester - Mischgewebe oder ein Kunststoffgewebe und/oder ein Metalldrahtgewebe (22) vorgesehen werden.

7. Verfahren nach einem der Ansprüche 3 bis 6, **dadurch gekennzeichnet, daß** als Werkstoff für die Verbindungsleiste (16) ein Polyamid- oder Polyesterwerkstoff eingesetzt wird.

8. Verfahren nach einem der Ansprüche 1 bis 7, **dadurch gekennzeichnet, daß** das Verschweißen der Filtermattenenden (14) ohne Schweißzusatz und ohne Verbindungsleiste (16) über ein Ultraschall - Schweißverfahren vorgenommen wird.

9. Verfahren nach einem der Ansprüche 3 bis 8, **dadurch gekennzeichnet, daß** die Verbindungsleiste (16) in radialer Richtung der Filtermatte (10) entlang deren Außenumfang aufgebracht wird.

## Claims

1. Method for the manufacture of a connection point for a tubular filter element for the filtration of fluids with a filter mat (10), whose facing ends (14) are connected with one another in a connection position via a two-dimensionally applied weld seam (28), whereby the same is equipped with an embossed track within the area of the free filter mat ends (14), **characterised in that** between the embossed weld seam (30) formed thus and the start of the transition towards the tubular filter mat an area is envisaged, within which a smooth weld seam (32) is applied without embossing as a flat track along the filter mat ends (14).

2. Method according to Claim 1, **characterised in that** the weld seam (28) in the form of the embossed track (30) and the track (32) without embossing are applied simultaneously.

3. Method according to Claim 1 or 2, **characterised in that** a connecting strip (16) in the form of a clip (18) is used for the connecting of the filter mat ends (14), whereby the same consist of a thermally distortable plastic and are pushed onto the filter mat ends (14) to hold the same together during the welding process.

4. Method according to one of the preceding Claims 1 to 3, **characterised in that** at least externally a plastic fibre (22) is used for the filter mat (10), or **in that** the filter mat (10) itself consists at least in part of a thermally distortable plastic.

5. Method according to one of the preceding Claims 1 to 4, **characterised in that** the embossment (34) consists of rectangular, especially square embossing elements (44) which are preferably matched to suit the grid structure of the relevant filter mat fibre.

6. Method according to one of the preceding Claims 1 to 5, **characterised in that** the tubular filter mat (10) is equipped with a pleating as well as a multi-layer construction, and that the layers incorporate at least a polyester fleece and/or a fibreglass layer and/or a paper fleece and/or a melt blown fleece and/or a stainless steel/polyester mixed fibre, or a plastic fibre and/or a metal wire fibre (22).

7. Method according to one of the preceding Claims 3 to 6, **characterised in that** the material for the connecting strip (16) consists of a polyamide or polyester material.

8. Method according to one of the preceding Claims 1 to 7, **characterised in that** the welding of the filter mat ends (14) is carried out without a welding additive and without a connecting strip (16) with the aid of an ultrasound welding process.

9. Method according to one of the preceding Claims 3 to 8, **characterised in that** the connecting strip (16) is applied in a radial direction of the filter mat (10) along the external circumference of the same.

## Revendications

1. Procédé pour réaliser un point de liaison sur un élément de filtration de forme tubulaire servant à la filtration de fluides, avec un tissu filtrant (10) dont les extrémités dirigées l'une vers l'autre (14) sont reliées entre elles dans une couche de liaison par l'intermédiaire d'un cordon de soudure qui est appliqué à plat (28) et qui est muni dans la zone des extrémités libres (14) du tissu filtrant d'une bande incrustée, **caractérisé en ce qu'**entre le cordon de soudure incrusté (30) ainsi formé et le début du passage vers le tissu filtrant de forme tubulaire est prévue une zone dans laquelle un cordon de soudure lisse (32) est appliqué sans incrustations dans une bande plate le long des extrémités du tissu filtrant (14).

2. Procédé selon la revendication 1, **caractérisé en ce que** le cordon de soudure (28) est appliqué en même temps sous la forme de la bande incrustée (30) et de la bande sans incrustations (32).

3. Procédé selon la revendication 1 ou 2, **caractérisé en ce que** pour la liaison des extrémités (14) du tissu filtrant est utilisée une baguette de liaison recourbée (16) ayant la forme d'un clip (18) qui se compose d'un matériau synthétique pouvant être soumis à une déformation thermique et qui, lorsqu'elle est enfilée sur les extrémités (14) du tissu filtrant, maintient celles-ci ensemble lors de l'opération de soudage.

4. Procédé selon l'une quelconque des revendications 1 à 3, **caractérisé en ce que** pour le tissu filtrant (10) est utilisé, au moins sur le côté du pourtour extérieur, un tissu en matériau synthétique (22) ou **en ce que** le tissu filtrant (10) lui-même est constitué au moins partiellement de matériaux synthétiques pouvant être soumis à une déformation thermique.

5. Procédé selon l'une quelconque des revendications 1 à 4, **caractérisé en ce que** l'empreinte (34) est formée d'éléments d'empreinte (44) de forme rectangulaire, en particulier quadratiques, qui sont de préférence adaptés à la structure de grille de la trame du tissu filtrant respectif.

6. Procédé selon l'une quelconque des revendications 1 à 5, **caractérisé en ce que** le tissu filtrant de forme tubulaire (10) est muni aussi bien d'un plissage que d'une structure multicouches et **en ce que** comme couches sont prévus au moins une nappe de fibres de polyester et/ou une couche de fibres de verre et/ou une nappe de fibres de papier et/ou une nappe de fibres de "Meltblown" et/ou un tissu mélangé constitué d'acier spécial et le polyester ou un tissu en matériau synthétique et/ou un tissu en fils métalliques (22).

7. Procédé selon l'une quelconque des revendications 3 à 6, **caractérisé en ce que** comme matériau pour la baguette de liaison recourbée (16) est utilisé matériau à base de polyamide ou de polyester.

8. Procédé selon l'une quelconque des revendications 1 à 7, **caractérisé en ce que** le soudage des extrémités (14) du tissu filtrant a lieu sans apport de matériau de soudure et sans baguette de liaison recourbée (16) à l'aide d'un procédé de soudage à ultrasons.

9. Procédé selon l'une quelconque des revendications 3 à 8, **caractérisé en ce que** la baguette de liaison recourbée (16) est mise en place dans le sens radial du tissu filtrant (10) le long de son pourtour extérieur.
